(19) Europäisches Patentamt

European Patent Office

Office européen des brevets

(11) **EP 0 756 174 B1**

(12) **EUROPEAN PATENT SPECIFICATION**

(45) Date of publication and mention
of the grant of the patent:
**16.04.2003 Bulletin 2003/16**

(51) Int Cl.[7]: **G01P 3/488**, G01P 1/02,
G01D 5/245

(21) Application number: **96901551.0**

(86) International application number:
**PCT/JP96/00246**

(22) Date of filing: **05.02.1996**

(87) International publication number:
**WO 96/024851 (15.08.1996 Gazette 1996/37)**

(54) **WHEEL SPEED DETECTOR**

RADGESCHWINDIGKEITSSENSOR

DETECTEUR DE VITESSE D'UNE ROUE

(84) Designated Contracting States:
**DE FR GB**

(30) Priority: **09.02.1995 JP 2180095**
**30.03.1995 JP 9965295**
**17.01.1996 JP 578596**

(43) Date of publication of application:
**29.01.1997 Bulletin 1997/05**

(73) Proprietor: **DENSO CORPORATION**
**Kariya-City, Aichi-Pref. (JP)**

(72) Inventors:
• **MASAKI, Kazuo**
  **Aichi-Pref. 448 (JP)**
• **HARADA, Yasuhiro**
  **Aichi-Pref. 448 (JP)**

(74) Representative:
**Winter, Brandl, Fürniss, Hübner, Röss, Kaiser,**
**Polte Partnerschaft**
**Patent- und Rechtsanwaltskanzlei**
**Alois-Steinecker-Strasse 22**
**85354 Freising (DE)**

(56) References cited:
JP-A- 2 090 060          JP-U- 57 125 183
JP-U- 59 014 061          JP-U- 59 189 475
JP-U- 61 098 378          JP-U- 63 107 854
JP-U- 63 193 361

• **MICROFILM OF THE SPECIFICATION AND**
  **DRAWINGS ANNEXED TO THE WRITTEN**
  **APPLICATION OF JAPANESE UTILITY MODEL,**
  **Application No. 153056/1974 (Laid-Open No.**
  **77522/1976) (NIPPON GAKKI ZEISO K.K.), 18**
  **June 1976, page 1.**
• **MICROFILM OF THE SPECIFICATION AND**
  **DRAWINGS ANNEXED TO THE WRITTEN**
  **APPLICATION OF JAPANESE UTILITY MODEL,**
  **Application No. 183458/1985 (Laid-Open No.**
  **91262/1987) (TOYOTA MOTOR CORP.), 11 June**
  **1987, page 1.**

## Description

## TECHNICAL FIELD

The present invention relates to a wheel speed detector for use in an automobile, having a rotor which rotates in accordance with rotation of a rotating object, for detecting rotational speeds of the rotating object electromagnetically based on the rotation of the rotor.

## BACKGROUND ART

A rotational speed detector having a rotor which rotates in accordance with rotation of a rotating object, the rotor including a rotor switch having a plurality of pairs of portions having different magnetic resistance arranged alternately, a magnetic circuit device arranged separately from the rotor for forming a closed magnetic circuit together with the rotor switch and a transducer for converting magnetic flux alternation in the closed magnetic circuit to electric signals has been known hitherto. For example, in the specification of Japanese Utility Model Laid-Open Publication No. Sho-48-43678, a rotational speed detector for a vehicle wheel having a metal rotor with claws which rotates together with a vehicle wheel, a magnetic core and a permanent magnet fixed to a vehicle body forming a closed magnetic circuit together with the claws and an electromagnetic coil for converting alternation of the magnetic flux in the closed magnetic circuit to alternating current is described.

In this rotational speed detector, two conditions in the closed magnetic circuit appear alternatively according to rotation of the rotor rotated with the wheel. Namely, the closed magnetic circuit is formed to include the claws of the rotor in the first condition while it is formed to include slits located between the claws in the second condition. Under the alternation of the two conditions, the magnetic resistance in the closed magnetic circuit changes, i.e., a magnetic switch formed in the closed magnetic circuit is turned on or off, thereby creating alternation of the magnetic flux in the closed magnetic circuit. According to the magnetic flux alternation, alternating current in the electromagnetic coil is generated. The frequency and voltage of the alternating current vary according to a magnitude of the magnetic flux change which has a certain relation with the rotational speed of the vehicle wheel. Therefore, the rotational speed of the vehicle wheel can be detected according to the alternating current.

For this type of the rotational speed detector, it is desirable to increase its output in order to improve accuracy of speed detection and to detect a lower rotational speed. In the conventional detector described above, one of the magnetic cores forming the closed magnetic circuit is disposed to face teeth or pillars of the rotor and the other core is disposed to face a portion of the rotor where no teeth are formed. That is, there is only one magnetic switch in the closed magnetic circuit. To increase the output of this detector, it is necessary to use a larger size of a permanent magnet and an electromagnetic coil.

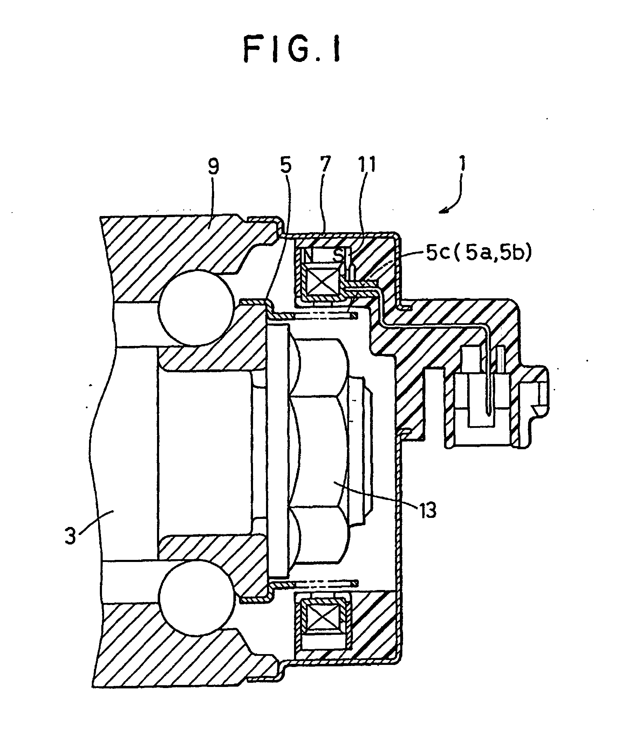

Microfilm of the specification and drawings annexed to the written application of Japanese Utility Model Application No. 153056/1974 (Laid-open No. 77552/1976) (Nippon Gakki Seiko K.K.), 18 June 1976, page 1, Figs. 1, 2, 3, 4 discloses a frequency generator which is constituted by a pair of thin ring-shaped metal sheets having respective stator (2, 3) and rotor pole pieces (10, 11) separated by set intervals and facing one another, in which coils (6) and magnets (4) for take-out of alternating-current voltage are provided between the pole pieces of said stator. Tip-end portions of teeth formed on oppositely arranged pole pieces of said stator and rotor constitute magnetic switches of a magnetic circuit formed by the stator and rotor. Since the magnetic circuit surrounding the coil is largely formed by the pole pieces of the rotor and a permeability element 12 arranged between them and since the effective dimensions of this components are very large the magnetic flux leakage in the magnetic circuit is very high.

Object of the present invention is to provide a wheel speed detector for use in an automobile in which the magnetic flux leakage in the magnetic circuit is minimized.

This object is solved by the features of claim 1.

## SUMMARY OF THE INVENTION

At least two magnetic switches for changing the amount of the magnetic flux passing through the closed magnetic circuit are disposed in the detector of the present invention. For example, the detector has two magnetic switches, a first and second switch, and these two switches operate to change the amount of the magnetic flux simultaneously.

Since the amount of the flux change between the two states in the closed magnetic circuit, one state where a position of the rotor having a lower magnetic resistance forms the closed magnetic circuit (this state is hereafter referred to as the state of magnetic switch ON) and the other state where a position of the rotor having a higher magnetic resistance forms the same (this state is hereafter referred to as the state of magnetic switch OFF), can be made larger than the conventional detector, the output from the transducer becomes larger. In other words, according to the present invention, the output of the transducer can be made larger and accuracy of detection can be increased, compared with that of the conventional detector, by adding one more magnetic switch without making the size of the detector larger.

In a rotational speed detector, a sensor device is mounted on a non-movable portion of a vehicle body and a rotor is mounted on a rotating shaft. Conversion of the alternation of magnetic flux to electric signals can be performed solely by the fixed portion.

It is also possible to include magnetic cores in the closed magnetic circuit. In this case, a first and a second magnetic switch having respective claws therewith can be formed on the cores as a single body. Both of the first and second switches can be made on the cores as a single body, or either one of the switches can be made as a single body on the core and the other on a permanent magnet. In case one of the switches is made on the permanent magnet, the number of parts to be used in a detector can be reduced.

In a rotational speed detector, an axial length of the sensor device mounted on the vehicle body can be shortened and the area facing the rotor switch can be enlarged because the claws of the first and second magnetic switches are aligned to face each other. This arrangement also contributes to improved accuracy of the detector.

It is also possible to dispose both of the first and second magnetic switches at one side of the rotor switch, i.e., the inside or outside of the rotor switch. In case the magnetic switches are disposed at the inside of the rotor switch, the diameter of the rotor switch can be made larger and, accordingly, the pattern of the rotor switch having portions of higher magnetic resistance and lower magnetic resistance can be made larger, compared with those of the detector. Should the rotor switch be made by stamping a thin magnetic material, it would be advantageous to have a rotor switch with a larger diameter. In case the magnetic switches with the claws are disposed at the outside of the rotor switch, the outer diameter of a whole detector can be smaller by making the number of windows or slits formed on the rotor fewer, compared with those of the detector.

The rotational speed detector can also be designed so that the first and second claws forming the magnetic switches are disposed at both sides of the rotor switch, so that the rotor switch is sandwiched between the first claws and the second claws. In this design, the axial length of the detector can be made shorter and the area of the claws facing the rotor switch can be made larger, achieving a higher accuracy of the detector. In other words, the larger claw area facing the rotor switch results in an increased magnetic flux flow when the closed magnetic circuit is brought to the ON-state, thus making the amount of the flux change larger and increasing the accuracy of the detector, accordingly.

The shape of a permanent magnet held between the first and second cores can be either cylindrical (covering a whole circumference) or arced (covering certain portions of a circumference). When a cylindrical permanent magnet is used, the magnet may be relatively weak, while it may be small but strong in case of arced magnets.

The first and second claws can be made throughout the whole circumference of the cores, making the number of the closed magnetic circuits larger. In this case, a higher output from the coil can be obtained and, accordingly, a higher accuracy of detection can be achieved.

Furthermore, the permanent magnet can be mounted next to the coil in an axial direction. In this design, the diameter of the sensor device can be made smaller, compared with the arrangement in which the magnet is disposed on or beneath the coil in a radial direction.

It is also possible to prepare means for positioning the cores, such as holes on the core or projections on a coil spool. This can help improve positioning accuracy in assembling parts of the sensor device, which, in turn, increases the accuracy of detection. In order to obtain an accurate switching of the closed magnetic circuit, it is important to position both cores accurately so that each of the claws on the first and second cores exactly faces each other. Accurate positioning of the cores guarantees distinct switching of the closed magnetic circuit, resulting in an improved detection accuracy.

Moreover, the sensor device to be mounted, for example, on a non-movable portion of a vehicle can be molded as a whole by a molding material, so that it can be easily mounted on a vehicle as a wheel speed sensor. In addition, the molding material serves to protect the sensor device from dust and foreign particles and thereby improves its durability.

The rotational speed detector is designed so that the magnetic switches have a surface which faces the rotor switch substantially in parallel therewith and an effective width of the magnetic switches is equal to or less than a width of the rotor switch. The effective width of the magnetic switches is the width of a magnetic flux passage between the magnetic switches and the rotor switch in the closed magnetic circuit. Since the effective width of the magnetic switches is set as afore-mentioned, it faces only the windows or slits in the rotor switch which have a high magnetic resistance when the magnetic switches are in the OFF state. In other words, leakage flux from the first and second magnetic switches to the rotor switch is minimized when the magnetic switches are in the OFF state. Accordingly, the amount of flux change between the ON state and the OFF state can be maximized and, therefore, the output from the coil is increased with a result of higher accuracy of detection.

A closed magnetic circuit is composed of a pair of magnetic switches each having a respective core with curved tips which forms a series of claws and a rotor switch having pillars and windows arranged alternately thereon. The closed magnetic circuit is brought to the ON state when the claws of the magnetic switches face the pillars of the rotor switch, while it is brought to the OFF state when the claws face the windows formed on the rotor switch. It has become clear experimentally that the wider the effective width of the magnetic switches becomes beyond the length of the pillars on the rotor switch, the smaller the flux change in the closed magnetic circuit between its ON state and its OFF state becomes, resulting in lower output from the transducer. For this reason, in the detector according to the present invention, the effective width of the magnetic switches is made less than the length of the pillar of the rotor, thereby achieving a higher output of the transducer with a higher detection accuracy and making the size of the detector smaller at the same time. By selecting the effective width of the magnetic switches and the length of the pillars at optimum dimensions, the detector claimed in Claim 26 can be made smaller in size while achieving a higher output of the transducer.

The detector is composed of a rotor switch having a series of pillars formed thereon with a certain interval and a closed magnetic circuit having a pair of magnetic cores disposed directly in contact with both ends of a permanent magnet or connected thereto via a magnetic material. Each end of the magnetic cores having a series of claws is bent to form magnetic switches facing the pillars of the rotor switch in parallel. The effective width of the magnetic switches is made less than the length of the pillars on the rotor switch. Should a portion of the effective width of the magnetic switches overlap with a portion of the magnetic core where no pillars are formed, the magnetic flux of the magnetic switches would tend to leak through the overlapped portion, resulting in the smaller flux change between the ON state and the OFF state and, accordingly, lower output of the transducer. This has been made clear through experiments. To avoid the disadvantage mentioned above, the effective width of the magnetic switches is made not to overlap the non-pillared portion of the rotor cores.

It is desirable to make a core gap between the magnetic core ends forming the magnetic switches (referred to as C hereafter) in a range of 10 to 65 percent of the effective width of the magnetic switches (referred to as A hereafter). It has become clear through experiments that a dimensional ratio, C/A , must not be too small or too large in the magnetic switch having the bent cores in order to obtain a higher output of the transducer. In case the rotational speed detector according to the present invention is used as a wheel speed detector for an automotive vehicle, it is necessary to obtain an electric signal from the detector which is high enough to distinguish the signal from noises such as a noise generated near a wheel for some reason or a noise induced in wiring for processing wheel speed signals by electromagnetic waves used for mobile communication or the like. It has become apparent through experiments that it is desirable to set the ratio C/A in a range from 0.1 to 0.65 in order to obtain a sufficiently high electric signal output for this use.

Since the ratio C/A is set in the range mentioned above according to the present invention, it is possible to secure an ideal electric signal when the rotational speed detector is used as a wheel speed detector for an automobile.

## BRIEF DESCRIPTION OF THE DRAWINGS

FIG. 1 is a cross-sectional view showing a whole structure of a first embodiment of a rotational speed detector according to the present invention;

FIG. 2(A) is a cross-sectional view showing a sensor device used in the first embodiment;

FIG. 2(B) is a bottom view of the sensor device shown in FIG. 2(A);

FIG. 3 is a graph showing an advantage of the first embodiment of the present invention;

FIG. 4 is a cross-sectional view showing a whole structure of a second embodiment according to the present invention;

FIG. 5(A) is a perspective view of a sensor device used in the second embodiment, showing important dimensions thereof;

FIG. 5(B) is a cross-sectional view of the sensor device used in the second embodiment, showing important dimensions thereof;

FIGS. 6(A) and 6(B) are graphs showing effects of various dimensions in the second embodiment;

FIG. 7(A) is a perspective view showing a modification of the second embodiment;

FIG. 7(B) is a cross-sectional view showing the modification of the second embodiment;

FIG. 8(A) is a cross-sectional view of a sensor device used in a third embodiment;

FIG. 8(B) is a bottom view of the sensor device shown in FIG. 8(A).

FIG. 9 is a cross-sectional view of a sensor device used in a fourth embodiment;

FIGS. 10(A) and 10(B) are a cross-sectional view and a side view of a sensor device used in a fifth embodiment, respectively;

FIGS. 11(A) and 11(B) are a cross-sectional view and a bottom view of a sensor device used in a sixth embodiment, respectively;

FIG. 12 is a perspective view of a sensor device used in a seventh embodiment;

FIG. 13 is a cross-sectional view of a sensor device used in an eighth embodiment;

FIG. 14 is a cross-sectional view of a sensor device used in an eighth embodiment, viewed from the A-A section in FIG. 13.

FIGS. 15(A) and 15(B) are cross-sectional views showing other modifications of the sensor device used in the eighth embodiment, viewed from the A-A section in FIG. 13;

FIG. 16 is a cross-sectional view of a sensor device used in a ninth embodiment;

FIGS. 17(A) and 17(B) are drawings showing effects of the ninth embodiment;

FIG. 18(A) is a cross-sectional view showing a whole structure of a tenth embodiment of the present invention;

FIG. 18(B) is a cross-sectional view of a sensor device used in the tenth embodiment;

FIG. 19 is a left side view of permanent magnets used in the tenth embodiment;

FIG. 20 is a cross-sectional view showing a whole structure of a eleventh embodiment of the present invention;

FIG. 21 is a cross-sectional view of a whole structure of a sensor device in a twelfth embodiment of the present invention;

FIGS. 22(A) and 22(B) are drawings showing a first core with positioning means, used in the twelfth embodiment;

FIGS. 23(A) and 23(B) are drawings showing a second core with positioning means, used in the twelfth embodiment; and

FIGS. 24(A), 24(B) and 24(C) are drawings showing a spool used in the twelfth embodiment.

## BEST MODE FOR CARRYING OUT THE INVENTION

The best mode for carrying out the present invention will be explained hereafter, referring to the accompanied drawings.

FIG. 1 shows a whole structure of a first embodiment for carrying out the present invention. The rotational speed detector shown in FIG. 1 is designed for a wheel speed detector for an automotive vehicle.

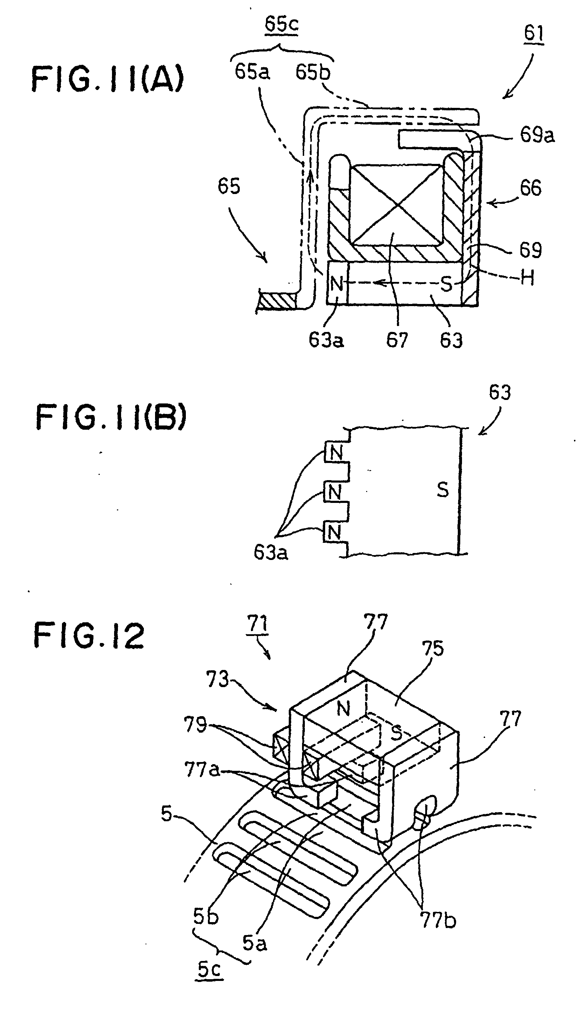

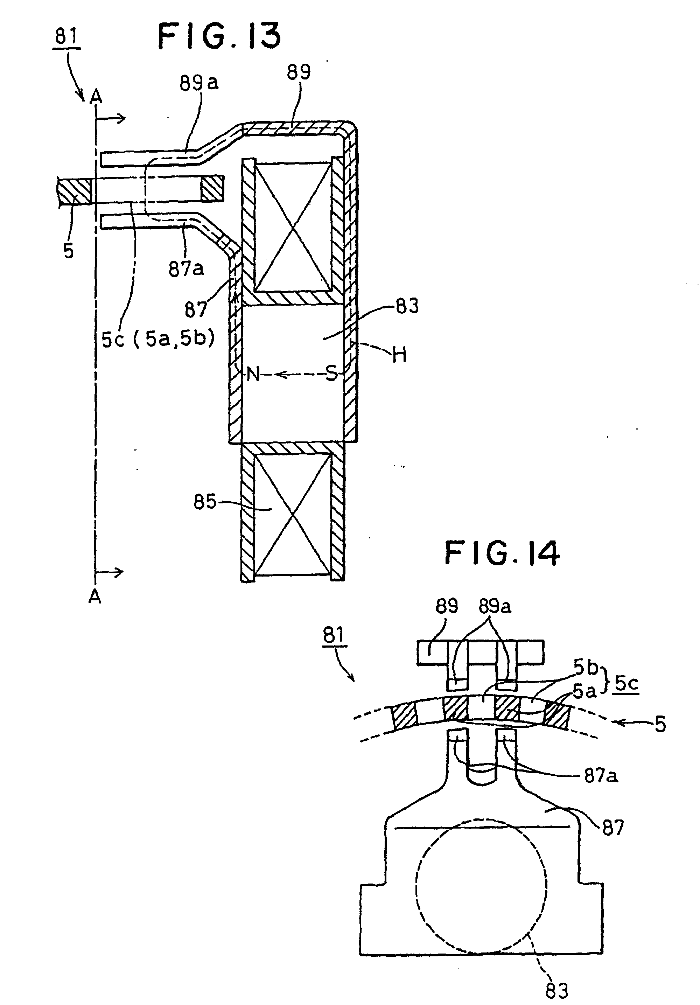

The rotational speed detector is mainly composed of a rotor 5 which is mounted on a rotor shaft 3 carrying a rotating wheel thereon, and a sensor device 11 mounted on a non-movable part of the vehicle via a housing 7 which is fixed to an outer race of a bearing. The sensor device 11 detects rotational speeds of the wheel in cooperation with the rotor 5. The rotor 5 has a shape of a cylinder encircling a bearing nut 13. On the cylindrical rotor 5, there is formed a rotor switch 5c having pillars 5a and windows 5b which are aligned alternately along a rotating direction of the rotor 5(refer to FIGS. 12 and 14).

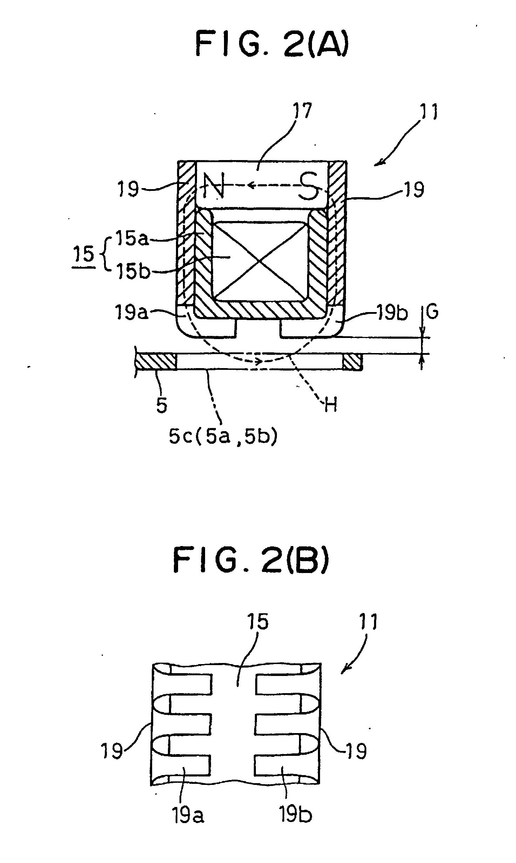

The sensor device 11 is ring-shaped surrounding the rotor switch 5c formed on the rotor 5. FIG. 2(A) shows a cross-sectional view of the sensor device 11, and FIG. 2(B) a bottom view (the inner surface) of the sensor device 11. Inside the sensor ring, there is mounted an electromagnetic coil 15 composed of a bobbin 15a and a coil 15b wound thereon. The coil 15b generates electric current according to the rotor switch rotation. A ring-shaped permanent magnet 17 is disposed at the outside of the electromagnetic coil 15. The permanent magnet 17 is magnetized in the axial direction of the rotor 5.

A pair of magnetic cores 19 is disposed in contact with both ends of the permanent magnet 17. One end of the core 19 is bent as shown in FIG. 2(A) and a series of claws 19a and 19b are formed thereon as shown in FIG. 2(B). The claws 19a form a first magnetic switch and the claws 19b a second magnetic switch. A pitch or interval of the claws 19a and 19b is made substantially equal to that of pillars 5a formed on the rotor 5. Since the claws of the magnetic switch and the pillars of the rotor switch are formed with the same pitch, when one of the claws faces one of the pillars, all other claws face all other pillars at the same time. At an instant when the claws face the pillars, the magnetic switch is brought to an ON state, and at another instant when the claws face the windows formed on the rotor, the magnetic switch is brought to an OFF state. These two states are repeated alternately as the rotor rotates.

The operation of the sensor device 1 constructed as mentioned above will be explained hereafter. The permanent magnet 17 and the pair of magnetic cores 19 form a closed magnetic circuit "H" as shown in FIG. 2(A) in cooperation with the rotor switch 5c. The closed magnetic circuit "H" is a summation of a series of closed magnetic sub-circuits formed by respective ones of the claws and pillars. The number of the sub-circuits formed is the same as that of pillars of the rotor switch. The closed magnetic circuit "H" is brought to the ON state or the OFF state alternately as the rotor 5 rotates, generating a flux alternation in the closed magnetic circuit "H". According to the flux alternation, an electric signal, a voltage and frequency of which vary in response to the rotational speed of the rotor, is generated in the coil 15b. Thus, the speed of the rotating object connected to the rotor 5 is detected based on the frequency of the alternating current signal generated in the coil.

In the rotational speed sensor according to the present invention, two magnetic switches are provided, i.e., the first switch 19a and the second switch 19b, each of which is formed on the first and the second core, respectively, and arranged to face the rotor switch 5c. In other words, there are two magnetic switches in the closed magnetic circuit "H", and, therefore, it is possible to obtain a larger magnetic flux alternation in the closed magnetic circuit "H", compared with the conventional detector which has only one magnetic switch in the magnetic circuit. Accordingly, a higher output of the alternating current can be obtained from the electromagnetic coil 15. Since the two magnetic switches can be provided almost in the same manner as in the conventional detector, other than making the claws on both of the cores, the rotational speed detector according to the present invention can be manufactured without enlarging the size thereof.

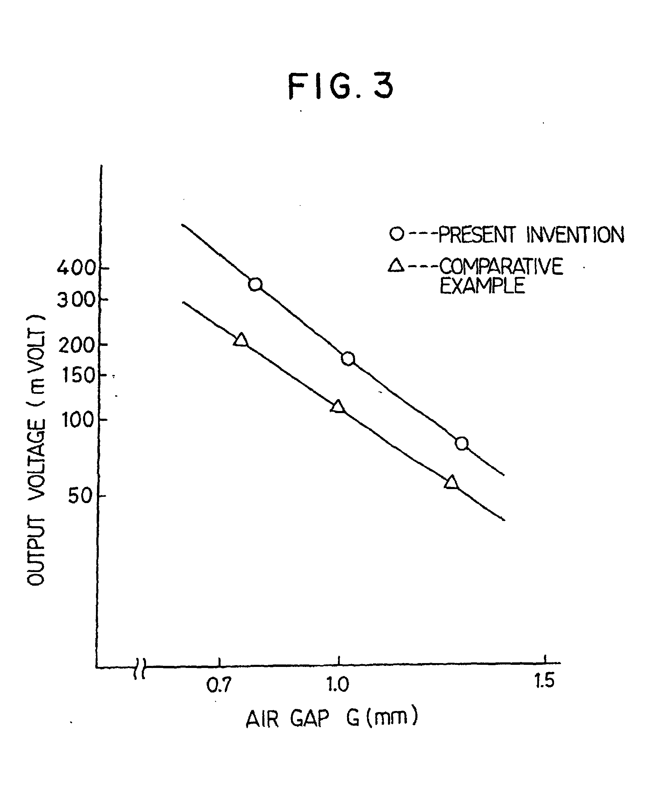

FIG. 3 shows the output voltage difference between the rotational speed detector having two magnetic switches according to the present invention and a comparative example detector having only one magnetic switch. For the purpose of comparison, the comparing sample detector is made so that one of the core ends having no claws faces a portion of the rotor 5 other than the rotor switch 5c and the other core end having the same claws faces the rotor switch 5c as in the present invention. In FIG. 3, the output voltages from two detectors, i.e., the detector according to the present invention and the comparing sample, are shown on the logarithmic scale ordinate at various air gaps "G" (air gap distance between the magnetic switch and the rotor switch as shown in FIG. 2(A)) on the abscissa. As seen in FIG. 3, the output voltages decrease according to increase of the air gap G in either case, but it is observed that the output voltage of the detector according to the present invention is 1.5 to 2.0 times larger than that of the comparative example. As has been clear from the above, the output voltage is greatly improved according to the present invention without enlarging the size of the detector. Due to the higher voltage obtained, the detection accuracy is also improved.

In the foregoing embodiment, the closed magnetic circuit is formed by the permanent magnet 17 and the cores 19 together with the rotor switch 5c. The present invention can be also carried out in many forms other than the foregoing embodiment, and many other modifications are possible without departing from the gist of the present invention. For example, it is not necessary to mount the sensor device 11 on a non-movable part and to make the rotor 5 rotate; instead, it is possible to mount the rotor 5 on the non-movable part and to make the sensor device 11 rotate. It is not necessary to arrange all of the first and second claws to face each other in a single phase; however at least some of the first and second claws have to be arranged to face each other to turn the magnetic switch ON and Off using both of the magnetic switches.

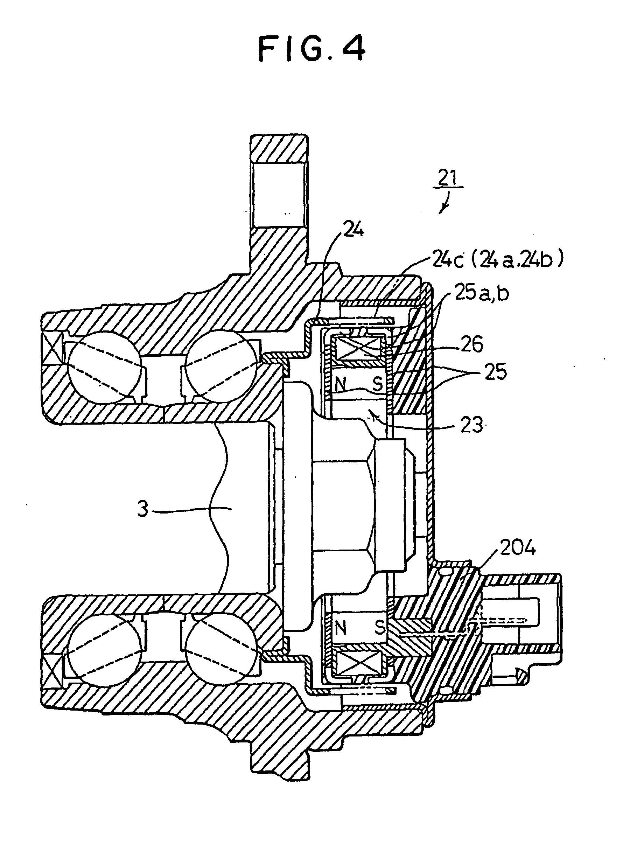

FIG. 4 is a cross-sectional view showing a rotational speed detector 21 as a second embodiment of the present invention, wherein a sensor device 23 corresponding to the sensor device 11 of the first embodiment is disposed inside a rotor 24 which corresponds to the rotor 5 of the first embodiment. In this second embodiment, too, a first magnetic switch 25a and a second magnetic switch 25b are provided at the ends of cores 25 which are arranged to face a rotor switch 24c provided on a rotor 24. Since the rotational speed detector constructed as mentioned above includes two magnetic switches which perform the same function as in the first embodiment, it is possible to obtain a high output and, therefore, an enhanced accuracy without enlarging the size of the detector. Particularly, in the second embodiment, since the rotor 24 is disposed at the outside of the sensor device 23, the diameter of the rotor 24 can be made larger than that in the first embodiment. Therefore, the detection accuracy can be further improved.

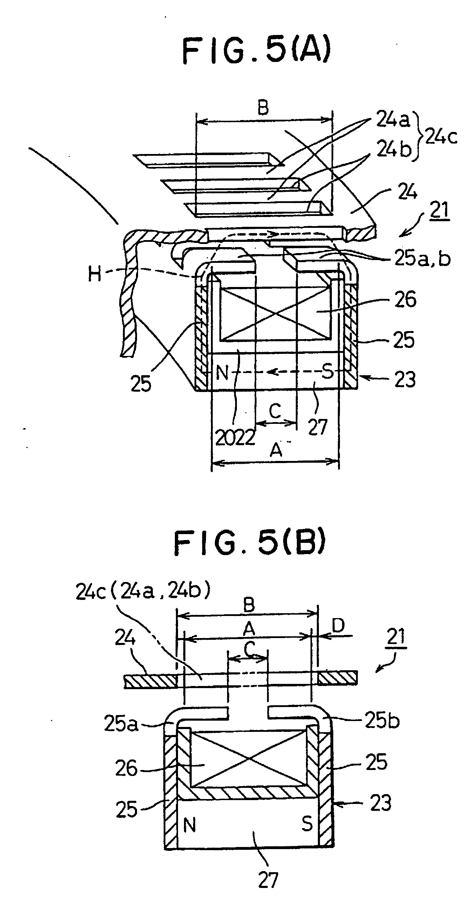

Further, in the second embodiment, various parts constituting the sensor device 23 including (see FIG. 5(A)) an electromagnetic coil 26, a bobbin 2022 on which the coil 26 is wound, magnetic cores 25 and a permanent magnet 27 which is disposed between the cores 25 are all molded in one piece by a molding material 204. Therefore, the rotational speed detector 21 including the sensor device 23 molded in one piece and the rotor 24 can be easily mounted on any objects the rotational speed of which is to be detected. In addition, the sensor device is well protected from dust coming into the device by means of the molding material. Further, connector terminals to take out signals generated in the coil 26 to the outside can be also molded together with other parts by the molding material 204, thereby increasing mechanical strength of the connector terminals.

To secure a higher output and a higher accuracy of the rotational speed detector 21, dimensions of some important parts must be optimized. FIG. 5(A) is a perspective view of a critical portion of the detector 21, and FIG. 5(B) is a cross-sectional view thereof. As shown in FIG. 5(A), the rotor switch 24 includes a series of pillars 24a and windows 24b which are disposed alternately. Each end of the cores 25 is bent inwardly and a series of claws 25a and 25b is formed thereon. A permanent magnet 27 and an electromagnetic coil 26 are disposed between a pair of cores 25. A closed magnetic circuit "H" is formed by the magnet 27 and the pair of cores 25 in cooperation with the rotor switch 24c, and the magnetic circuit encircles an electromagnetic coil 26.

As shown in FIGS. 5(A) and 5(B), important dimensions of the detector are named as follows: dimension A is an effective width of the magnetic switch; dimension B is a length of the pillar 24a or the window 24b of the rotor switch 24c; dimension C is a core gap between each end of the cores 25; and dimension D is half of the difference between A and B. The rotational speed detector 21 is designed so that the following relations exist among the dimensions mentioned above.

$$B - A \geq 0$$

$$D \geq 0$$

$$0.65 \geq C/A \geq 0.1$$

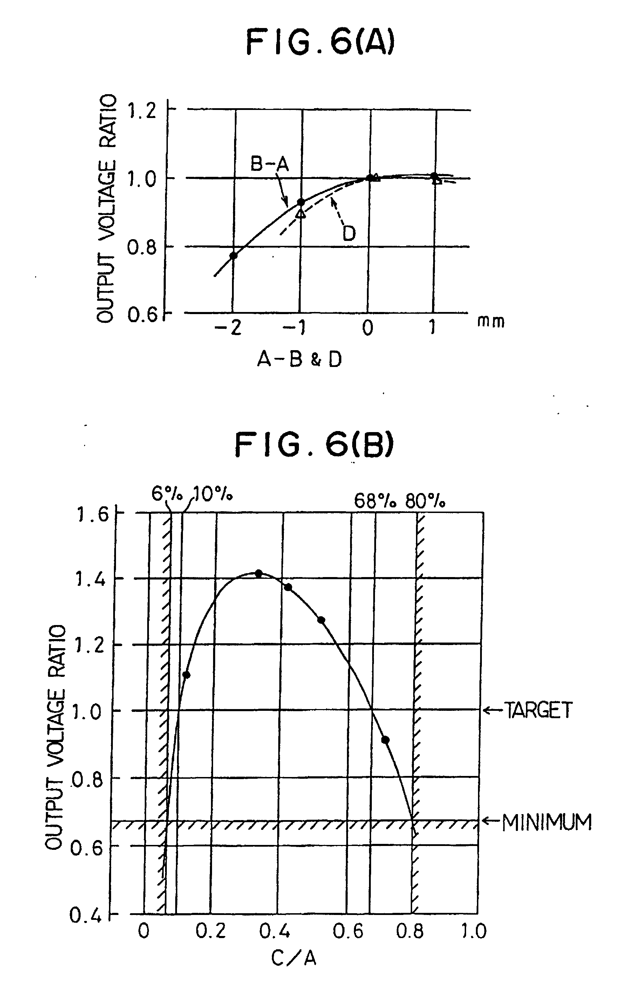

The reason why the relations among those dimensions are set as mentioned above will be explained in reference to FIGS. 6(A) and 6(B). In FIG. 6(A), an output voltage ratio is set at 1.0 when A equals B. As seen in FIG. 6(A), the larger the dimension A becomes beyond the dimension B, the lower the output ratio becomes, and the more the dimension D becomes negative, the lower the ratio becomes. This is because a flux alternation according to ON and Off states of the magnetic circuit becomes smaller. On the other hand, the output voltage ratio does not change much when B - A and D become larger in a positive range. Therefore, a higher output can be secured by making B-A $\geq$ 0 and D $\geq$ 0.

As seen in FIG. 6(B), C/A has an optimum range, i.e., when C/A becomes either too large or too small, the output ratio decreases. Accordingly, C/A should be in a range of 0.1 to 0.68, preferably in a range of 0.1 to 0.65 considering a certain margin.

By setting the relations among those dimensions as mentioned above, the rotational speed detector 21 is able to generate enough output.

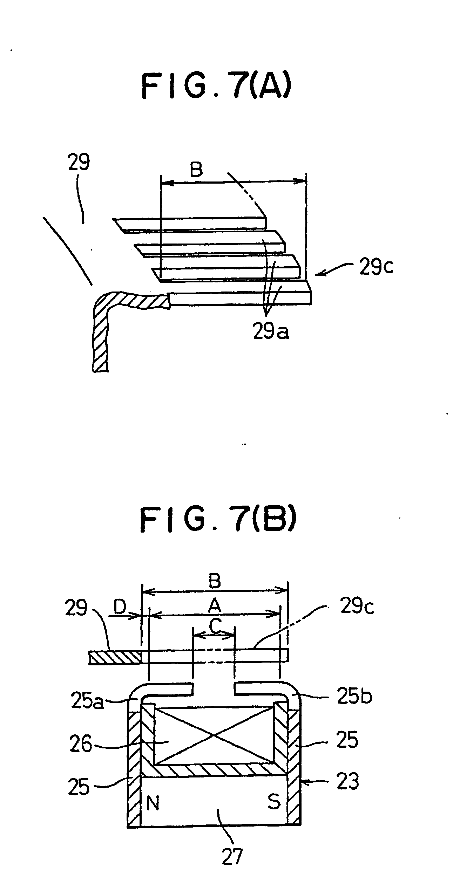

The dimension setting mentioned above can be applied also to a modified rotor 29 shown in FIG. 7 (A). In the modification shown in FIG. 7(A), the rotor switch 29c is composed of pillars 29a and open slits between the pillars in place of windows 24b in the embodiment shown in FIG. 5(A). The sensor device 23 is disposed inside the rotor 29 to face it as shown in FIG. 7 (B). In this case, too, the names of the dimensions are the same as in the foregoing embodiment, and relations among these dimensions are set according to the following formulae.

$$B - A \geq 0$$

$$D \geq 0$$

$$0.65 \geq C/A \geq 0.1$$

With the dimensions thus set, a large enough output can be obtained from the detector.

The dimension setting mentioned above can be applied, as well, to the rotational speed detector 1 as in FIG. 1 in which the rotor 5 is disposed inside the sensor device 11, and the same results can be obtained.

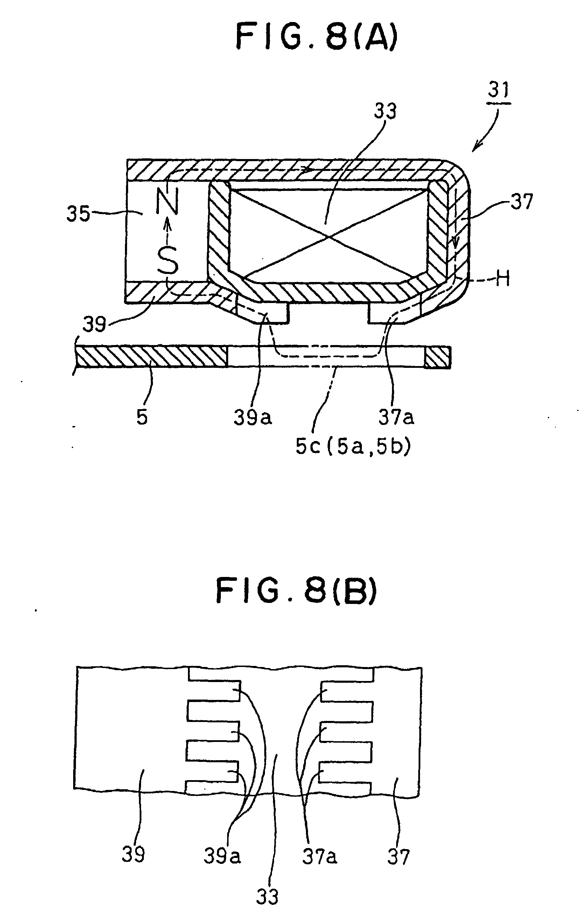

FIG. 8(A) is a cross-sectional view of a third embodiment of a rotational speed detector 31 according to the present invention. In this embodiment, a ring-shaped permanent magnet 35 is disposed at one side of an electromagnetic coil 33. The permanent magnet 35 is magnetized so that the outside thereof has an N pole and the inside an S pole. A first magnetic core 37 is disposed in contact with the N pole of the magnet 35 and extends to the inside of the coil 33, encircling the outside of the coil 33. A second magnetic core 39 is attached to the S pole of the magnet 35 and extends directly to the inside of the coil 33. Claws 37a and 39a which constitute magnetic switches are formed at the each end of the cores 37 and 39, respectively. These claws are more clearly shown in FIG. 8(B) which is viewed from the bottom of the magnetic switches. The magnetic switches are disposed to face to the rotor switch 5c having pillars 5a and windows 5b. The claws 37a and 39a of the magnetic switches are aligned at the same interval as the pillars 5a of the rotor switch 5c. As the cores 37 and 39 having claws 37a and 39a at the each end thereof are extended to the inside of the coil 33, the length of the rotor switch 5c can be made relatively short. Therefore, the size of the rotational speed detector 31 can be smaller.

Further, in the rotational speed detector 31 according to the third embodiment of the present invention, the permanent magnet 35 is disposed next to the coil 33 along the axial direction of a rotating object. By disposing the magnet 35 and the coil 33 in this way, it is possible to make the diameter of the rotational speed detector 31 smaller, as opposed to a usual arrangement of the components of this kind of the detector which includes a closed magnetic circuit composed of a magnet, cores and a rotor switch, and a transducer having a magnetic coil.

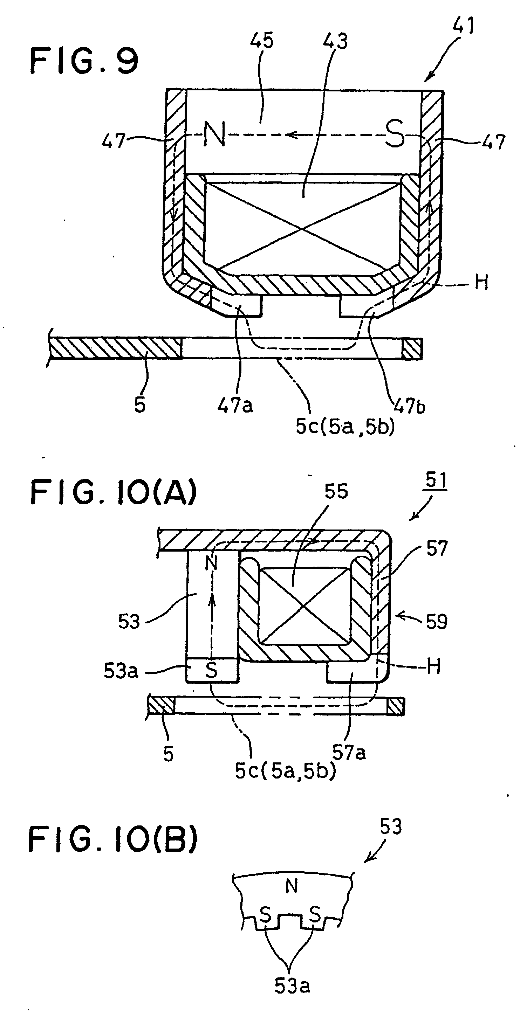

FIG. 9 shows a cross-section of a rotational speed detector 41 as a fourth embodiment of the present invention. In this embodiment, a permanent magnet 45 which is ring-shaped and magnetized along the axial direction is disposed at the outside of a magnetic coil 43. In contact with each side of the magnet 45, a pair of magnetic cores 47 is disposed. By the pair of cores 47, the magnetic coil 43 is embraced. Claws 47a and 47b constituting magnetic switches are formed at each end of the pair of cores 47, and the magnetic switches are disposed to face the rotor switch 5c having pillars 5a and windows 5b. In this case, too, the claws 47a and 47b are aligned at the same interval as the pillars 5a of the rotor switch 5.

Since each end of the pair of cores 47 is bent inwardly to embrace the coil 43, the length of the rotor switch 5c can be made short, thereby making the size of the detector small.

In all the embodiments mentioned above, claws are formed at the each end of the cores to constitute the magnetic switches. This arrangement, however, can be modified as in the following embodiments. FIG. 10(A) is a cross-sectional view of a rotational speed detector 51 as a fifth embodiment of the present invention, and FIG. 10(B) shows a fragmental side view of a permanent magnet used in the fifth embodiment. As shown in FIG. 10(A), a ring-shaped permanent magnet 53 is disposed next to an electromagnetic coil 55, and is magnetized so that the outside of the magnet 53 has an N pole and the inside an S pole. The inside surface of the magnet 53 has a series of projections 53a made with a certain interval each of which is magnetized as an S pole. The interval of the projections 53 is the same as that of pillars 5a of the rotor switch 5c, so that each of the projections 53 faces one of the pillars 5a on the rotor switch 5c. As shown in FIG. 10(A), a magnetic core 57 is disposed in contact with the outer surface of the ring-shaped magnet 53, and extends toward the coil 55. The end of the core 57 having a series of claws 57a thereon is bent inwardly to hold the coil 55. Each of the claws 57a is formed to face one of the projections 53a on the magnet 53. The claws 57a and the projections 53a constitute magnetic switches and form a closed magnetic circuit "H" in cooperation with the rotor switch 5c. In the closed magnetic circuit "H", there are two magnetic switches, formed by claws 57a and projections 53a respectively, as in the other embodiments mentioned before. Therefore, the detector 51 according to the fifth embodiment of the invention has the same advantage to obtain a higher output in a small size as the other embodiments. Further, as the permanent magnet 53 is disposed next to the coil 55 in the axial direction, the outer diameter of the detector 51 can be made smaller as in the detector 31 of the third embodiment. Moreover, as one of the two magnetic switches is formed directly on the inner surface of the magnet without using a magnetic core, only one magnetic core is necessary in this sensor device 59. This means that the number of parts necessary to construct the sensor device is reduced, and accordingly, the manufacturing cost can be reduced.

FIG. 11(A) shows a cross-sectional view of a rotational speed detector 61 as a sixth embodiment of the present invention. FIG. 11(B) is a fragmental view of a permanent magnet used in the sixth embodiment, viewed from the inside of the magnet. As shown in FIG. 11(A), a rotor 65 is composed of a disc portion 65a and a cylindrical portion 65b which is made in a single body with the disc portion 65a. The cylindrical portion 65b is disposed to encircle a sensor device 66. On both of the disc and cylindrical portions, a series of windows or slits are formed to constitute a rotor switch 65c.

A ring-shaped permanent magnet 63 is disposed inside an electromagnetic coil 67 which is also ring-shaped. The magnet 63 is magnetized in the axial direction to have an N pole at one end facing to the disc portion 65a and an S pole at the other end. As shown in FIG. 11(B), the magnet 63 has a series of projections formed at its end facing the disc portion 65a which are all magnetized to have N poles. Each of these projections 63a faces one of windows or slits made on the disc portion 65a. As shown in FIG. 11(A), a magnetic core 69 is disposed in contact with the magnet 63 at its end having an S pole and extends radially along one side of the coil 67 and bent inwardly at the core end to form a magnetic switch 69a. The magnetic switch 69a is constituted by a series of claws the interval of which is the same as that of windows or slits formed on the cylindrical portion 65b of the rotor switch 65c.

A closed magnetic circuit "H" is formed in the rotational speed detector 61 thus constructed by the magnet 63, the core 69 and the projections 63a in cooperation with the rotor switch 65a. In the closed magnetic circuit "H", there are two magnetic switches formed, one by the claws 69a and the other by the projections 63a. Therefore, in the same manner as in the foregoing other embodiments, a high output can be obtained from the detector 61. Further, in this detector 61, only one core 69 is used by replacing the other core with the projections 63a made on the magnet 63. Accordingly, the number of parts necessary for the detector 61 is reduced and the manufacturing cost can be lowered.

Though the sensor device in all of the foregoing embodiments is made in a ring-shape facing all over the surface of the rotor, the sensor device can be modified to face a part of the rotor as shown in FIG. 12 as a seventh embodiment. FIG. 12 is a perspective view of a rotational speed detector 71 according to the seventh embodiment of the present invention. A sensor device 73 of this detector 71 faces only a part of the outer surface of the rotor switch 5c having pillars 5a and windows 5c which are the same as in other embodiments. The sensor device 73 is composed of a magnet 75 which is magnetized in the axial direction of the rotor 5, a pair of cores 77 each of which is attached to each end of the magnet 75 and bent inwardly at the end thereof, and a magnetic coil 79 which is wound around one of the cores 77. Claws 77a and 77b are formed on each end of the pair of cores 77 at the same interval as that of the rotor pillars 5a. Therefore, the claws 77a and 77b simultaneously face the pillars 5a or windows 5b of the rotor switch 5c constituting two magnetic switches. Due to the two magnetic switches of the detector 71, a high output and accordingly a high accuracy can be obtained. Particularly in this embodiment, the size of the detector 71 can be further smaller because the size of the sensor device 73 is much smaller than other embodiments mentioned before.

In all of the foregoing embodiments, the sensor device is placed at one side of the rotor switch surfaces. However, this arrangement can be modified so that the sensor device faces both of the surfaces of the rotor switch. FIG. 13 is a cross-sectional view of the rotational speed detector 81 as an eighth embodiment of the present invention, and FIG. 14 is a fragmental cross-sectional view of the same viewed from the section A - A in FIG. 13. As shown in FIG. 13, a column-shaped permanent magnet 83 is placed along the axial line and magnetized in the axial direction with an N pole at the rotor side and an S pole at the other side. Around the column magnet 83 a magnetic coil 85 is wound. A first magnetic core 87 with a first magnetic switch 87a is disposed in contact with the N pole of the magnet 83 and a second magnetic core 89 with a second magnetic switch 89a is disposed in contact with the S pole thereof. The first magnetic switch 87a and the second magnetic switch 89a are placed to face the inner surface of the rotor switch 5c and the outer surface of the rotor switch 5c with a certain air gap, respectively. In other words, both of the magnetic switches 87a and 89a sandwich the rotor switch 5c with a certain air gap. As shown in FIG. 14, the first and second magnetic cores 87 and 89 have two respective claws forming the magnetic switches 87a and 89a. The pitch of the two claws are the same as that of the pillars 5a of the rotor switch 5c, so that each of the claws faces each of the pillars simultaneously. A closed magnetic circuit "H" is formed by the magnet 83 and the magnetic switches 87a and 89a, in cooperation with the rotor switch 5c in the detector 81. The closed magnetic circuit "H" of this embodiment, too, includes two magnetic switches 87a and 89a therein as in the other embodiments mentioned before. Accordingly, a high output and high accuracy can be obtained from the detector 81 without making its size large.

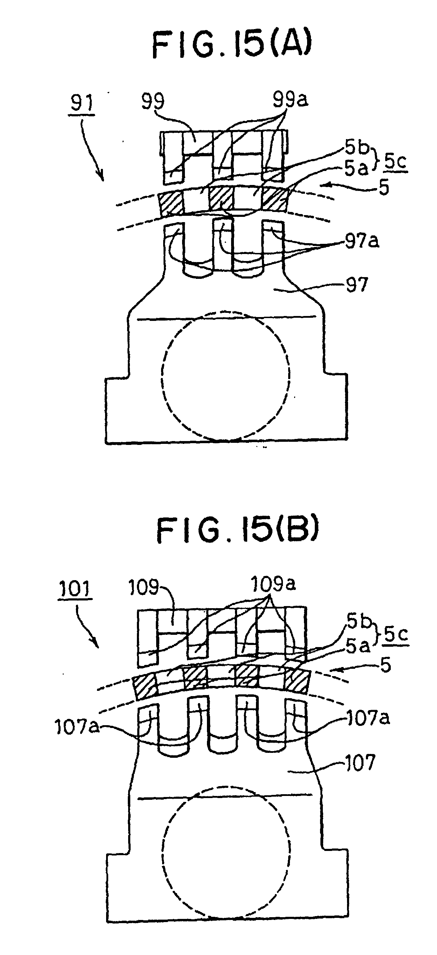

Further, the eighth embodiment of the present invention can be modified so that the magnetic switch is composed of more than two claws. FIGS. 15(A) and 15(B) are fragmental cross-sectional views showing modifications of the eighth embodiment of the present invention, viewed from the section A - A in the FIG. 13. The rotational speed detectors 91 and 101 shown in FIGS. 15(A) and 15(B) are constructed in the same way as the detector 81 except for the form of the magnetic switches.

In a rotational speed detector 91 shown in FIG. 15(A), a first magnetic core 97 and a second magnetic core 99 have three respective claws 97a and 99a which constitute magnetic switches. In a rotational speed detector shown in FIG. 15(B), four respective claws 107a and 109a are provided on a first core 107 and a second core 109, respectively. Accordingly, a closed magnetic circuit "H" of the detector 91 is composed of three parallel magnetic circuits and that of the detector 101 is composed of four parallel magnetic circuits. By increasing the number of the parallel circuits in the closed magnetic circuit "H", a higher output and higher accuracy can be obtained.

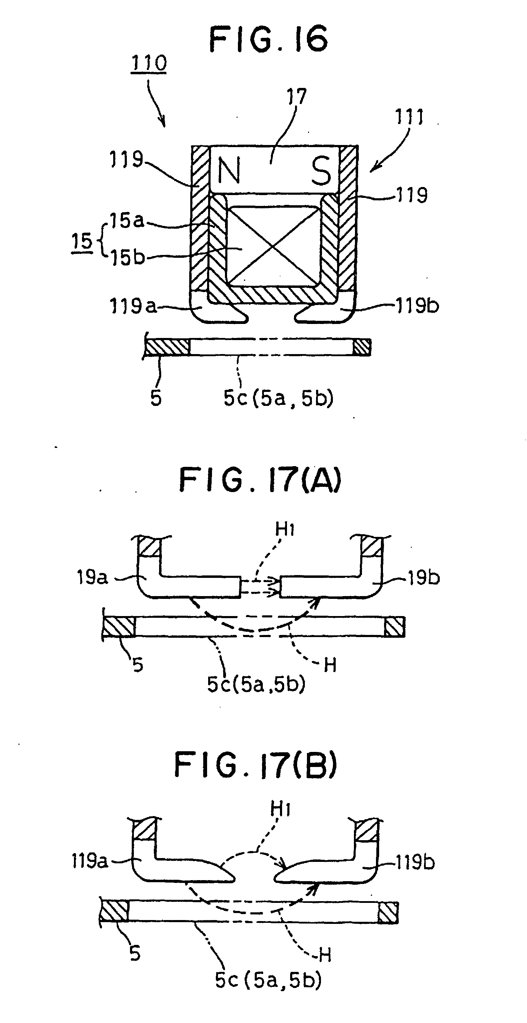

FIG. 16 shows a sectional view of a speed detector 110 as a ninth embodiment of the present invention. The detector 110 is substantially the same as the first embodiment shown in FIG. 1, FIG. 2(A) and FIG. 2(B), except for a shape of a pair of cores 119 used in a sensor device 111. Therefore, the parts used in this embodiment other than the cores 119 have the same numbers as in FIG. 2(A) and the detailed explanation as to the construction and operation of this embodiment is omitted.

In the rotational speed detector 110, the pair of cores 119, each of which is attached to one side of the magnet 17, extends to hold the electromagnetic coil 15 therein. Each end of the core 119, where the claws 119a and 119b are formed, is bent inwardly to face each other. Each one of the claws 119a and 119b has a slanted or tapered tip as shown in FIG. 16. The slanted tip of the claws is formed so that the gap between the tips of the claws 119a and 119b is the smallest on the claw surface facing the rotor switch 5c and it becomes wider gradually as it becomes more distant from the surface. Because of the slanted tips of the claws in the rotational speed detector 110, the following advantages can be obtained in addition to the merits of the detector 1 of the first embodiment mentioned above.

In the case of the detector 1 which has a core gap as shown in FIG. 17(A), when the core gap is made too small, a leakage magnetic path "H1" is formed in the core gap in addition to the main magnetic circuit "H" which passes through the rotor switch 5. As opposed to the case of the detector 1, in the detector 110 which has a slanted core gap as shown in FIG. 17(B), the leakage magnetic path "H1" is not easily formed, because a magnetic flux has a characteristic in general to form a path which is perpendicular to a surface of a magnetic material. In other words, the slanted core gap serves to suppress the flux leakage. As the slanted core gap has the shortest distance at the nearest point to the rotor switch 5c and the surface area of the magnetic switches 119a and 119b facing the rotor switch 5c is the same as in the case of detector 1, the main magnetic circuit "H" passing through the rotor switch 5c can be formed in the same manner as in the case of the detector 1. Thus, the closed magnetic circuit "H" passing through the rotor switch 5c is effectively formed, while the flux leakage is suppressed. Because of this, the core gap in the ninth embodiment can be made smaller than in the first embodiment. Accordingly, the size of the detector 110 can be smaller than the detector 1.

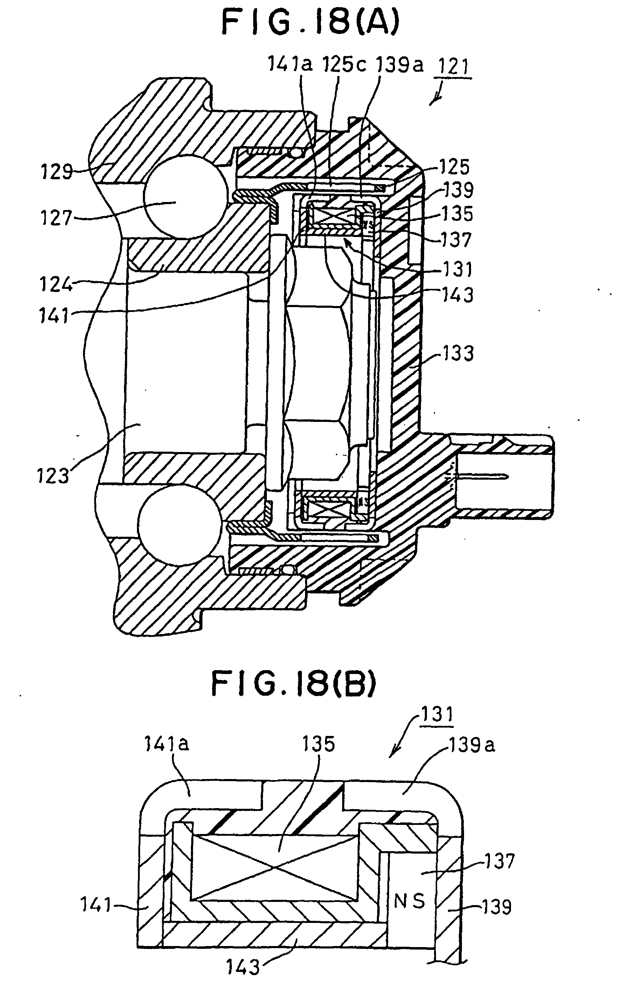

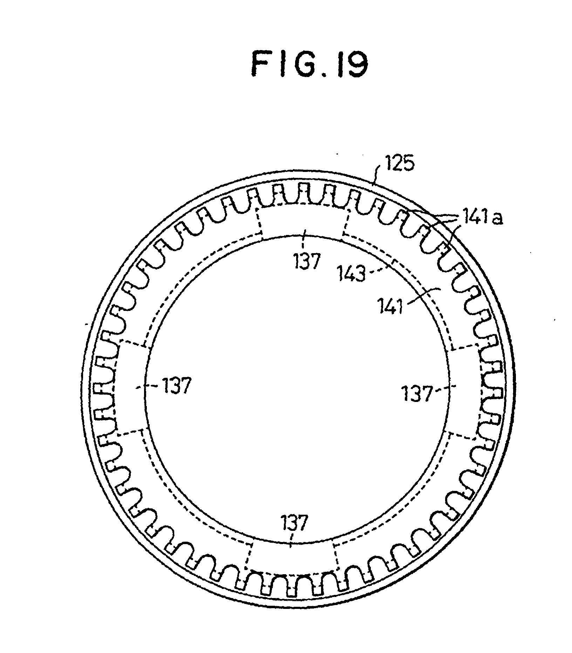

FIG. 18(A) is a cross-sectional view of a rotational speed detector 121 as a tenth embodiment of the present invention, and FIG. 18(B) is a fragmental cross-section showing a sensor device 131 used in the detector 121. FIG. 19 is a plane view showing permanent magnets 137 used in the sensor device 131, viewed from the left side of the sensor device 131. As shown in FIG. 18(A), the rotational speed detector 121 is composed of a rotor 125 fixed to an inner race 124 of a rotating shaft 123 and a sensor device 131 fixed to a housing 133 which is mounted on a non-rotating outer race 129. The sensor device 131 is disposed inside the rotor 125. The inner race 124 is rotatably mounted to the non-rotating outer race 129 by means of ball bearings 127. The housing 133 is made of a synthetic resin and the sensor device 131 is molded as a single body with the housing 133 in a molding process of the housing 133.

The rotor switch 125c having pillars and windows formed alternately thereon in the same manner as in the afore-mentioned rotor switch 5 is formed on the rotor 125. The sensor device 131 is composed of, as shown in FIG. 18(B), a permanent magnet 137, an electromagnetic coil 135 disposed next to the magnet 137 in the axial direction, a first disc-shaped magnetic core 139 disposed in contact with one side of the magnet 137, a second disc shaped magnetic core 141 disposed on a side of the coil 135, and a third magnetic core 143 disposed inside the coil 135. The permanent magnet 137 is magnetized in the axial direction with an N pole at its side close to the coil 135. Though the magnet 137 may be a ring-shaped one, four arc-shaped magnets disposed inside the disc-shaped first core 139 with an interval of 90-degree are used in the tenth embodiment, as shown in FIG. 19. As shown in FIGS. 18(A) and 18(B), the disc-shaped first core 139 is disposed in contact with the S pole of the magnets 137 and the disc-shaped second core 141 is disposed along one side of the coil 135. Fringes of the first and second core 139 and 141 are bent inwardly to form a series of claws 139a and 141a, respectively. Each of the claws 139a and 141a is aligned to face each of the pillars constituting rotor switch 125c. Thus, the claws 139a and 141a constitute rotor switches. The cylindrical third core 143 is disposed inside the coil 135 and forms a magnetic flux path connecting the N pole of the magnets 137 and the second core 141. A closed magnetic circuit "H" is formed by the magnet 137, the third core 143, the second core 141 with the first magnetic switch 141a, the rotor switch 125c with pillars and the first core 139 with the first magnetic switch 139a. In other words, a magnetic flux starting from the N pole of the magnet flows through these parts to the S pole of the magnet.

Since the rotational speed detector 121 constructed as mentioned above has two magnetic switches 139a and 141a and these switches are bent inwardly to face each other, a high output and high accuracy can be obtained from the detector while its size is kept small. In addition, since the magnet 137 and the coil 135 are disposed along the axial direction, the diameter of the sensor device 131 can be made small. Therefore, a whole size of the detector 121 can be made small and it can be easily mounted, for example, inside a hub bearing of a vehicle wheel. Further, due to a shorter length of the closed magnetic circuit "H", a higher efficiency of the detector is attained. Further in this particular embodiment, an amount of permanent magnet used is reduced by using four separate arc-shaped magnets 137 instead of a ring-shaped magnet, and accordingly the detector can be made lighter and the manufacturing cost is reduced.

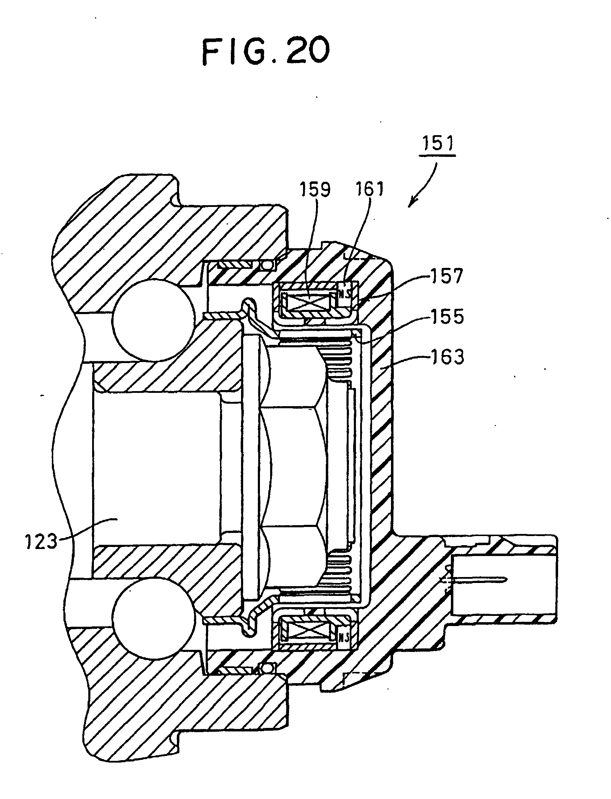

FIG. 20 shows a rotational speed detector 151 as an eleventh embodiment of the present invention. In this detector, a sensor device 157 is disposed at the outside of the rotor 155. A sensor device 157 of this embodiment is made substantially the same as the sensor device 131 of the tenth embodiment. The only difference is that the outer and inner surfaces of the sensor device 157 are reversed compared with the sensor device 131. Also in this embodiment, magnet 161 is disposed next to a coil 159 in the axial direction and a housing 163 is made by synthetic resin molding together with the sensor device 157, as in the foregoing tenth embodiment. Therefore, the same advantages, such as a smaller size, easy mounting, a higher output, a lighter weight and a lower cost, as in the tenth embodiment can be attained in this eleventh embodiment, too.

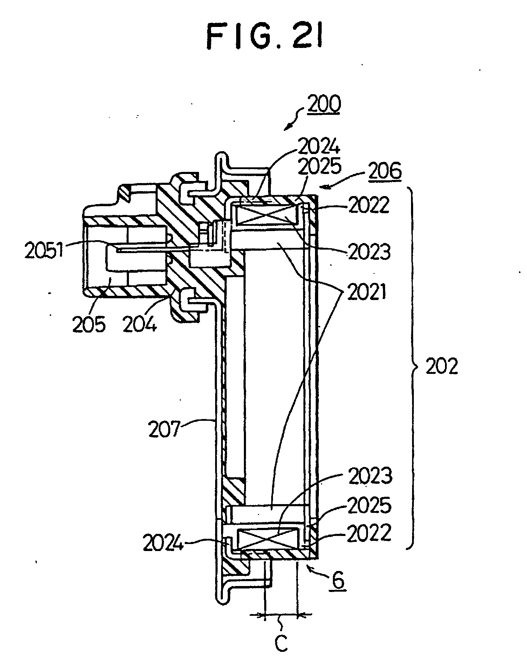

FIG. 21 shows another rotational speed detector 200 as a twelfth embodiment of the present invention. In this embodiment, a sensor device or an electromagnetic pickup 202 is molded together with a housing 207 which is mounted on a non-movable portion (not shown in the drawing) to cover an end of a rotating object (not shown in the drawing). A ring-shaped electromagnetic coil 2023 is molded by a synthetic resin together with a cylindrical housing 207. An end portion of the rotating object, for example, a wheel shaft of a vehicle, is disposed coaxially with the sensor device 202 at the inside thereof. A rotor made of a magnetic material with claws and windows thereon (not shown in the drawing) which is mounted on the rotating object is disposed at a peripheral space 206 of the sensor device 202 with a certain air gap therebetween. The sensor device 202 is composed of a cylindrical spool or bobbin 2022, an electromagnetic coil 2023 wound on the spool 2022, a cylindrical magnet 2021 disposed on the inside of the spool 2022, and a pair of ring-shaped magnetic cores, i.e., a first core 2024 and a second core 2025, which are disposed in contact with both ends of the magnet 2021.

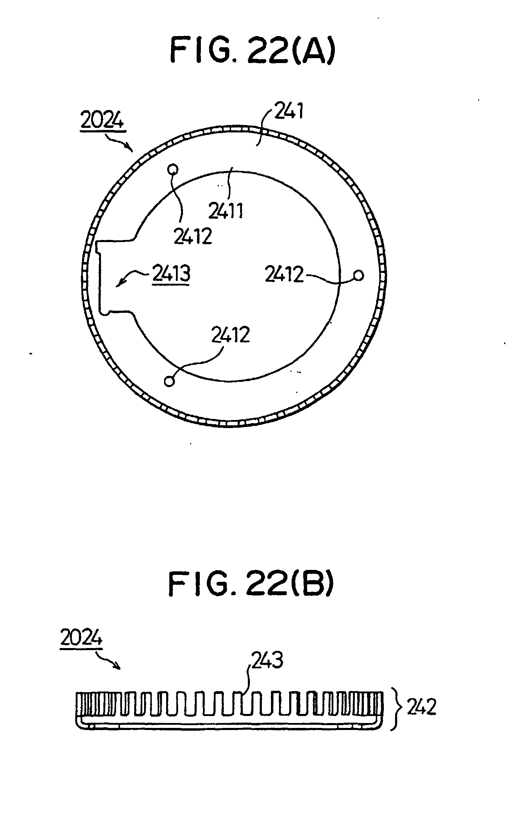

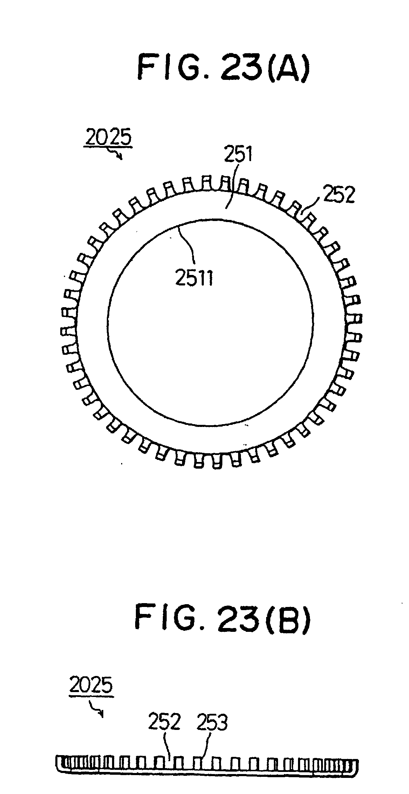

FIGS. 22(A) and 22(B) show the first core 2024, and FIGS. 23(A) and 23(B) show the second core 2025. These cores are made of a magnetic material and formed into a substantially ring-shape. These cores 2024 and 2025 are assembled to hold the ring magnet 2021 and the ring-shaped coil 2021 therein and are disposed perpendicular to the axial direction of the rotor shaft, constituting a magnetic circuit in cooperation with the rotor disposed at the peripheral space 206. An outer peripheral portion of the ring-shaped cores 2024 and 2025 is bent inwardly and a series of claws 243 and 253 is formed on the inwardly bent portion. The respective claws 243 and 253 face each other with a certain core gap which corresponds to the dimension C shown in FIGS. 5(A) and 5(B). Each one of the claws 243 is aligned to face one of the claws 253. In other words, the cores 2024 and 2025 are assembled on the spool 2022 so that all the claws exactly face each other.

As shown in FIGS. 22(A) and 22(B), the first core 2024 consists of two portions, a flat ring-shaped rib 241 and a series of claws 243 formed on a peripheral portion of the rib 241 at an equal interval from each other and bent perpendicularly to the rib 241. In the drawings, equally spaced 48 claws are shown as an example. The inner peripheral portion 2411 of the rib 241 contacts a side of the cylindrical magnet 2021 when assembled. Equally spaced 3 holes 2412 are made on the rib 241 for positioning the core 2024 against the spool 2022. There is an opening at the center of the first core 2024 to accommodate an end portion of a rotating object. Another opening 2413 is provided in the core 2024 for accommodating a connector 205 shown in FIG. 21.

As shown in FIGS. 23(A) and 23(B), the second core 2025 consists of two portions, a flat ring-shaped rib 251 and a series of claws 253 formed in the same manner as in the first core 2024. An inner peripheral portion 2511 of the rib 251 contacts the other side of the magnet 2021 in the same manner as the peripheral portion 2411 contacts one side of the magnet 2021. The claws 253 are formed equally spaced from each other and the number of the claws 253 in this example is 48, which is the same as that of the claws 243 formed on the first core 2024, so that each claw of one of the cores faces one of the claws of the other core with the core gap C when assembled. Spaces 252 formed between the claws 253 are used for fitting-in the second core 2025 to the spool 2022.

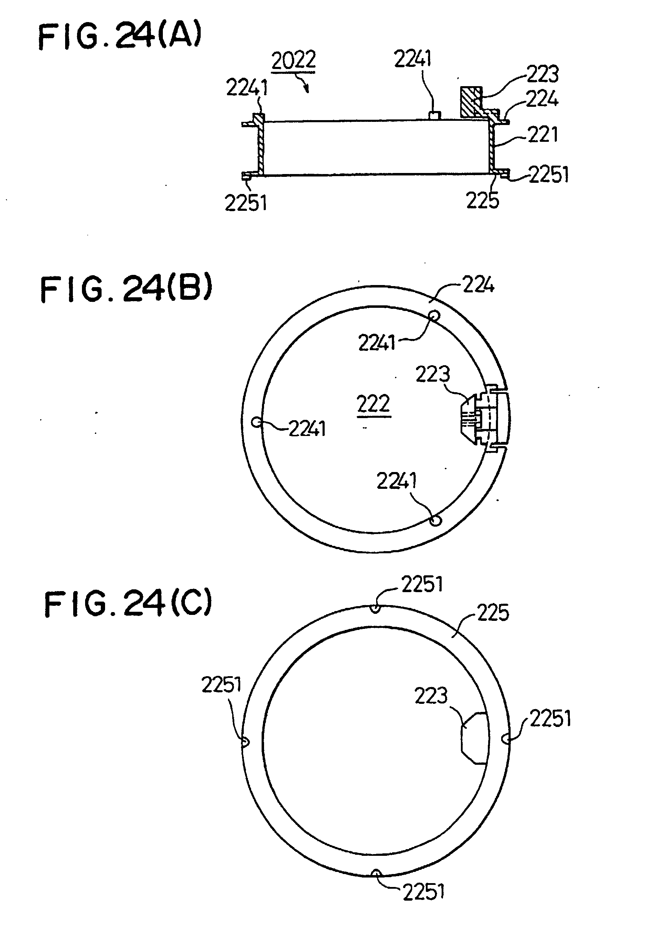

FIG. 24(A) shows a cross-sectional view of the spool or bobbin on which the cores 2024 and 2025 are assembled. FIGS. 24(B) and 24(C) show a top surface of the spool 2202 and a bottom surface of the same, respectively. The spool 2022 is bobbin-shaped and a groove 221 in which the coil 2023 is wound is provided thereon. A hollow space 222 inside the spool 2022 is a space for accommodating an end portion of a rotating object. The first core 2024 is assembled on the top surface 224 where a connector terminal support 223 is provided. The connector terminal 2051 shown in FIG. 21 is taken out through the connector terminal support 223. Three bosses 2241 are provided, equally spaced, on the top surface 224 of the spool 2022. These bosses 2241 are inserted into the three holes 2412 provided on the rib 241 of the first core 2024 when the first core 2024 is assembled on the spool 2022. Four projections 2251 are provided, equally spaced, on the bottom surface 225 of the spool 2022. These projections 2251 are inserted into the space 252 formed between the claws 253 of the second core 2025 when the second core 2025 is assembled on the spool 2022.

When the second core 2025 is assembled on the spool 2022, the claws 253 are always located at both sides of the projections 2251. Therefore, it is easy to design a position of the bosses 2241 on the spool 2022 so that each claw 243 of the first core 2024 always faces one of the claws 253 of the second core 2025 when the first and second cores 2024 and 2025 are assembled on the spool 2022. The coil 2023 is wound on the spool 2022 before both cores 2024 and 2025 are assembled on the spool 2022, and the magnet 2021 is assembled together with the cores 2024 and 2025. Assembling of these parts is quite easily done because the magnet 2021 attracts the cores 2024 and 2025 made of a magnetic material in the assembling process. Therefore, it is not necessary to use an adhesive material to fix these parts in the assembling process. However, an adhesive material can be used if desired.

In the foregoing embodiment, in order to position the parts to be assembled, bosses and projections are made on the spool 2022 and holes and positioning spaces on the cores 2024 and 2025. However, this can be reversed, i.e., projections or bosses may be made on the cores and holes or grooves on the spool. Also, in this embodiment, the magnetic cores constituting magnetic switches are placed at the outer surface of the sensor device 202. However, the location of the magnetic switches of the sensor device can be modified in many ways. For example, the magnetic switches may be placed at the inside surface of the sensor device or an end surface of the sensor device (e.g.,the left end surface of the sensor device in FIG. 21).

Further, the number of the claws on the cores constituting the magnetic switches, which decides an output frequency, may be variably chosen according to the purpose for which the rotational speed detector is used, though it is set to 48 in the foregoing embodiment. It is necessary, of course, to choose the same number of the pillars on the rotor switch as the number of the claws on the cores.

The rotational speed detector according to the present invention can be used for detecting rotational speed of many kinds of rotating objects, and is not limited to the wheel speed detection of a vehicle as exemplified in this specification.

## Claims

1. A wheel speed detector (1, 21, 31, 41, 51, 61, 71, 81, 91, 101, 110, 121, 131, 151, 200) for use in an automobile, the wheel speed detector comprising:

   an outer race member (9, 129) connected to a vehicle body;
   a wheel shaft (3, 123) rotatably supported by the outer race member via a bearing (127);
   a rotor (5, 24, 29, 65, 125, 155) mounted on the wheel shaft, the rotor having a cylindrical rotor switch (5c, 24c, 29c, 65c, 125c) made of a magnetic material, the rotor switch including pillar portions (5a, 24a, 29a, 65a) having high permeance and window portions (5b, 24b, 29b, 65b) having low permeance alternately formed thereon; and
   a sensor device (11, 23, 73, 131, 157, 202) fixed to the outer race member, the sensor device including a magnet (17, ), a pair of magnetic cores (19, 25, 47, 77) and an 27, 35, 45, 53, 63, 75, 83, 137, 161, 2021) electromagnetic coil (15), those sensor device 26, 33, 43, 55, 67, 79, 85, 135, 159, 2023 components being integrally molded by a resin material forming a cover member covering an end of the wheel shaft, wherein:

   the sensor device faces the cylindrical rotor switch with an air gap (G) therebetween, forming a magnetic circuit (H) that includes two magnetic switches which simultaneously open or close the magnetic circuit in response to rotation of the rotor, thereby generating a rotational speed signal in the electromagnetic coil.

2. The wheel speed detector as in claim 1, wherein:

   the pair of magnetic cores are disposed on both sides of the magnet;
   one end of the magnetic cores is bent inwardly to face each other with a core gap (C); and
   the magnet and the electromagnetic coil are held within the pair of magnetic cores.

3. The wheel speed detector as in claim 1, wherein:

   a first magnetic core of the pair of magnetic cores is attached to one side of the magnet and is bent to hold the magnet and the electromagnetic coil; and
   a second magnetic core of the pair of magnetic cores is attached to the other side of the magnet and extends to face the bent end of the first magnetic core.

4. The wheel speed detector as in claim 1, wherein:

the pair of magnetic cores are attached to both sides of the magnet; one end of the magnetic cores is bent inwardly to face each other with a core gap (C); and the electromagnetic coil (79) is wound on one of the magnetic cores.

5. The wheel speed detector as in claim 1, wherein:

the pair of magnetic cores are attached to both sides of the magnet and hold the magnet and the electromagnetic coil therein; and one end of the magnetic cores (87, 89) which is opposite to the end attached to the magnet forms an air gap for accommodating the cylindrical rotor switch (5c), thereby constituting the two magnetic switches.

6. The wheel speed detector as in claim 2, 3 or 4, wherein the one end (119a, 119b) of the magnetic cores facing each other is slanted so that the core gap (C) is smallest at a position closest to the cylindrical rotor switch and becomes gradually larger according to a distance from the cylindrical rotor switch.

7. The wheel speed detector as in claim 2, 3 or 4, wherein the core gap (C) of the magnetic cores facing each other is 10 to 65 percent of an effective length (A) of the sensor device forming the two magnetic switches.

8. The wheel speed detector as in claim 5, wherein the core end accommodating the cylindrical rotor switch has two claws (87a, 89a) thereon facing the cylindrical rotor switch.

9. The wheel speed detector as in claim 5, wherein the core end accommodating the cylindrical rotor switch has more than two claws (97a, 99a, 107a, 109a) facing the cylindrical rotor switch.

10. The wheel speed detector as in claim 1, wherein the window portions of the cylindrical rotor switch are formed in a substantially rectangular shape (5b, 24b).

11. The wheel speed detector as in claim 1, wherein the window portions of the cylindrical rotor switch are formed in a substantially rectangular slit (29b) having one open end.

12. The wheel speed detector as in claim 10 or 11, wherein a length (B) of the window or the slit, measured along a rotational axis of the rotor, is larger than an effective length (A) of the sensor device forming the two magnetic switches.

13. The wheel speed detector as in claim 1, wherein the rotor is disposed at the outside of the sensor device.

14. The wheel speed detector as in claim 1, wherein the rotor is disposed at the inside of the sensor device.

15. The wheel speed detector as in claim 2, wherein:

a series of claws (243, 253) are formed on one end of the pair of magnetic cores, the number of claws formed on both magnetic cores being the same, and positioning means (2412) is provided on the magnetic cores for positioning the claws of both cores to face each other when both cores are assembled.

16. The wheel speed detector as in claim 15, wherein:

the sensor device further comprises a spool (2022) on which the electromagnetic coil is wound, and the positioning means comprises a plurality of projections (2241) provided on the spool and holes (2412) provided on at least one of the cores so that the projections fit into the holes.

**Patentansprüche**

1. Radgeschwindigkeitserfassungsgerät (1, 21, 31, 41, 51, 61, 71, 81, 91, 101, 110, 121, 131, 151, 200) zur Verwendung in einem Kraftfahrzeug, wobei das Radgeschwindigkeitserfassungsgerät aufweist:

ein äußeres Laufringbauteil (9, 129), welches mit einem Fahrzeugkörper verbunden ist;

eine Radwelle (3, 123), welche durch das äußere Laufringbauteil mittels eines Lagers (127) drehbar unterstützt ist;

ein umlaufendes Bauteil (5, 24, 65, 125, 155), welches auf der Radwelle angebracht ist, wobei das umlaufende Bauteil einen zylindrischen, aus einem magnetischen Material hergestellten Umlaufschalter (5c, 24c, 29c, 65c, 125c) aufweist, wobei der Umlauf Schalter abwechselnd Pfeilerabschnitte (5a, 24a, 29a, 65a) mit hohem magnetischem Leitwert und Fensterabschnitte (5b, 24b, 29b, 65b) mit niedrigem magnetischem Leitwert darauf ausgebildet aufweist; und

eine Sensorvorrichtung (11, 23, 73, 131, 157, 202), welche an dem äußeren Laufringbauteil befestigt ist, wobei die Sensorvorrichtung einen Magneten (17, 27, 35, 45, 53, 63, 75, 83, 137, 161, 2021), ein Paar von Magnetkernen (19, 25, 47, 77) und eine elektromagnetische Wicklung (15, 26, 33, 43, 55, 67, 79, 85, 135, 159, 2023) aufweist, wobei diese Komponenten der Sensorvorrichtung durch ein Harzmaterial integral vergossen sind, welches ein Abdeckungsbauteil ausbildet, welches ein Ende der Radwelle abdeckt, wobei:

die Sensorvorrichtung dem zylindrischen Umlaufschalter mit einem Luftspalt (G) dazwischen gegenübersteht, was einen magnetischen Kreis (H) ausbildet, welcher zwei Magnetschalter enthält, welche den magnetischen Kreis als Reaktion auf eine Drehung des umlaufenden Bauteils gleichzeitig öffnen oder schließen, wodurch ein Winkelgeschwindigkeitssignal in der elektromagnetischen Wicklung erzeugt wird.

2. Radgeschwindigkeitserfassungsgerät wie in Anspruch 1, wobei:

das Paar von Magnetkernen auf beiden Seiten des Magneten angeordnet ist;

ein Ende der Magnetkerne einwärts gebogen ist, um einander mit einem Kernspalt (C) gegenüberzustehen; und

der Magnet und die elektromagnetische Wicklung innerhalb des Paars von Magnetkernen gehalten werden.

3. Radgeschwindigkeitserfassungsgerät wie in Anspruch 1, wobei:

ein erster Magnetkern des Paars von Magnetkernen an einer Seite des Magneten befestigt ist und gebogen ist, um den Magneten und die elektromagnetische Wicklung zu halten; und

ein zweiter Magnetkern des Paars von Magnetkernen an der anderen Seite des Magneten befestigt ist und sich ausdehnt, um dem gebogenen Ende des ersten Magnetkerns gegenüberzustehen.

4. Radgeschwindigkeitserfassungsgerät wie in Anspruch 1, wobei:

das Paar von Magnetkernen an beiden Seiten des Magneten befestigt ist;

ein Ende der Magnetkerne einwärts gebogen ist, um einander mit einem Kernspalt (C) gegenüberzustehen; und

die elektromagnetische Wicklung (79) auf ein Ende der Magnetkerne gewickelt ist.

5. Radgeschwindigkeitserfassungsgerät wie in Anspruch 1, wobei:

das Paar von Magnetkernen an beiden Seiten des Magneten befestigt ist und den Magneten und die elektromagnetische Wicklung hierin hält; und

ein Ende der Magnetkerne (87, 89), welches dem an dem Magneten befestigten Ende gegenüberliegt, einen Luftspalt zur Aufnahme des zylindrischen Umlaufschalters (5c) ausbildet, wodurch die zwei Magnetschalter aufgebaut werden.

6. Radgeschwindigkeitserfassungsgerät wie in Anspruch 2, 3 oder 4, wobei das eine Ende (119a, 119b) der einander gegenüberstehenden Magnetkerne so abgeschrägt ist, daß der Kernspalt (C) an einer dem zylindrischen Umlaufschalter nächsten Stelle am kleinsten ist und gemäß einem Abstand von dem zylindrischen Umlaufschalter allmählich größer wird.

7. Radgeschwindigkeitserfassungsgerät wie in Anspruch 2, 3 oder 4, wobei der Kernspalt (C) der einander gegenüberstehenden Magnetkerne 10 bis 65 Prozent einer wirksamen Länge (A) der die zwei Magnetschalter ausbildenden Sensorvorrichtung beträgt.

8. Radgeschwindigkeitserfassungsgerät wie in Anspruch 5, wobei das den zylindrischen Umlaufschalter aufnehmende Kernende zwei Klauen (87a, 89a) hierauf aufweist, welche dem zylindrischen Umlaufschalter gegenüberstehen.

9. Radgeschwindigkeitserfassungsgerät wie in Anspruch 5, wobei das den zylindrischen Umlaufschalter aufnehmende Kernende mehr als zwei Klauen (97a, 99a, 107a, 109a) aufweist, welche dem zylindrischen Umlaufschalter gegenüberstehen.

10. Radgeschwindigkeitserfassungsgerät wie in Anspruch 1, wobei die Fensterabschnitte des zylindrischen Umlaufschalters in einer im wesentlichen rechteckigen Gestalt (5b, 24b) ausgebildet sind.

**11.** Radgeschwindigkeitserfassungsgerät wie in Anspruch 1, wobei die Fensterabschnitte des zylindrischen Umlaufschalters in einem im wesentlichen rechteckigen Schlitz (29b) ausgebildet sind, welcher ein offenes Ende aufweist.

**12.** Radgeschwindigkeitserfassungsgerät wie in Anspruch 10 oder 11, wobei eine Länge (B) des Fensters oder des Schlitzes, gemessen entlang einer Drehachse des umlaufenden Bauteils, größer als eine wirksame Länge (A) der die zwei Magnetschalter ausbildenden Sensorvorrichtung ist.

**13.** Radgeschwindigkeitserfassungsgerät wie in Anspruch 1, wobei das umlaufende Bauteil außerhalb der Sensorvorrichtung angeordnet ist.

**14.** Radgeschwindigkeitserfassungsgerät wie in Anspruch 1, wobei das umlaufende Bauteil innerhalb der Sensorvorrichtung angeordnet ist.

**15.** Radgeschwindigkeitserfassungsgerät wie in Anspruch 2, wobei:

eine Abfolge von Klauen (243, 253) auf einem Ende des Paars von Magnetkernen ausgebildet ist, wobei die Anzahl der auf beiden Magnetkernen ausgebildeten Klauen die gleiche ist, und

eine Positioniereinrichtung (2412) zum Positionieren der Klauen auf beiden Kernen vorgesehen ist, um einander gegenüberzustehen, wenn beide Kerne zusammengebaut sind.

**16.** Radgeschwindigkeitserfassungsgerät wie in Anspruch 15, wobei:

die Sensorvorrichtung weiter eine Spule (2022) aufweist, auf welche die elektromagnetische Wicklung gewickelt ist, und

die Positioniereinrichtung eine Mehrzahl von auf der Spule vorgesehenen Vorsprüngen (2241) und auf wenigstens einem der Kerne vorgesehene Löcher (2412) derart aufweist, daß die Vorsprünge in die Löcher passen.

## Revendications

**1.** Détecteur de vitesse de roue (1, 21, 31, 41, 51, 61, 71, 81, 91, 101, 110, 121, 131, 151, 200) pour utilisation dans une automobile, le détecteur de vitesse de roue comprenant :

un élément de chemin extérieur (9, 129) relié à une carrosserie du véhicule ;

un arbre de roue (3, 123) supporté, avec faculté de rotation, par l'élément de chemin extérieur via un palier (127) ;

un rotor (5, 24, 29, 65, 125, 155) monté sur l'arbre de roue, le rotor ayant un commutateur de rotor cylindre (5c, 24c, 29c, 65c, 125c) constitué d'une matière magnétique, le commutateur de rotor comportant des parties de pilier (5a, 24a, 29a, 65a) ayant une haute perméance et des parties de fenêtre (5b, 24b, 29, 65b) ayant une faible perméance, formées alternativement sur celles-ci ; et

un dispositif de capteur (11, 23, 73, 131, 157, 202) fixé à l'élément de chemin extérieur, le dispositif de capteur comprenant un aimant (17, 27, 35, 45, 53, 63, 75, 83, 137, 161, 2021), une paire de noyaux magnétiques (19, 25, 47, 77) et une bobine électromagnétique (15, 26, 33, 43, 55, 67, 79, 85, 135, 159, 2023), ces composants de dispositif de capteur étant solidairement moulés par un matériau de résine formant un élément de couvercle recouvrant une extrémité de l'arbre de roue, dans lequel :

le dispositif de capteur est en regard du commutateur de rotor cylindrique avec un espacement d'air (G) entre ceux-ci, formant un circuit magnétique (H) qui comporte deux commutateurs magnétiques qui ouvrent ou ferment simultanément le circuit magnétique en réponse à la rotation du rotor générant par cet effet un signal de vitesse de rotation dans la bobine électromagnétique.

**2.** Détecteur de vitesse de roue selon la revendication 1, dans lequel :

la paire de noyaux magnétiques sont disposés sur les deux côtés de l'aimant ;

une extrémité des noyaux magnétiques est fléchie vers l'intérieur pour faire face l'un à l'autre avec un espacement de noyau (C) ; et

l'aimant et la bobine électromagnétique sont maintenus au sein de la paire de noyaux magnétiques.

**3.** Détecteur de vitesse de roue selon la revendication 1, dans lequel :

un premier noyau magnétique de la paire des noyaux magnétiques est fixé à un côté de l'aimant et est fléchi pour maintenir l'aimant et la bobine électromagnétique ; et

**14**

un second noyau magnétique de la paire de noyaux magnétiques est fixé à l'autre côté de l'aimant et s'étend pour faire face à l'extrémité fléchie du premier noyau magnétique.

4. Détecteur de vitesse de roue selon la revendication 1, dans lequel :

la paire de noyaux magnétiques sont fixés aux deux côtés de l'aimant ;

une extrémité des noyaux magnétiques est fléchie vers l'intérieur pour faire face l'un à l'autre avec un espacement de noyau (C) ; et

la bobine électromagnétique (79) est enroulée sur l'un des noyaux magnétiques.

5. Détecteur de vitesse de roue selon la revendication 1, dans lequel :

la paire de noyaux magnétiques sont fixés aux deux côtés de l'aimant et y maintiennent l'aimant et la bobine électromagnétique ; et

une extrémité des noyaux magnétiques (87, 89) qui est opposée à l'extrémité fixée à l'aimant forme un espacement d'air destiné à loger le commutateur de rotor cylindrique (5c), constituant par cet effet les deux commutateurs magnétiques.

6. Détecteur de vitesse de roue selon la revendication 2, 3 ou 4, dans lequel la première extrémité (119a, 119b) des noyaux magnétiques faisant face l'un à l'autre est inclinée de sorte que l'espacement de noyau (C) est le plus petit à une position la plus proche du commutateur de rotor cylindrique et devient progressivement plus grande selon une distance par rapport au commutateur de rotor cylindrique.

7. Détecteur de vitesse de roue selon la revendication 2, 3 ou 4, dans lequel l'espacement de noyau (C) des noyaux magnétiques faisant face l'un à l'autre est de 10 à 65 % d'une longueur effective (A) du dispositif de capteur formant les deux commutateurs magnétiques.

8. Détecteur de vitesse de roue selon la revendication 5, dans lequel l'extrémité de noyau logeant le commutateur de rotor cylindrique comporte deux mâchoires (87a, 89a) sur sa surface faisant face au commutateur de rotor cylindrique.

9. Détecteur de vitesse de roue selon la revendication 5, dans lequel l'extrémité de noyau logeant le commutateur de rotor cylindrique comporte plus de deux mâchoires (97a, 99a, 107a, 109a) faisant face au commutateur de rotor cylindrique.

10. Détecteur de vitesse de roue selon la revendication 1, dans lequel les parties de fenêtre du commutateur de rotor cylindrique sont formées en une forme essentiellement rectangulaire (5b, 24b).

11. Détecteur de vitesse de roue selon la revendication 1, dans lequel les parties de fenêtre du commutateur de rotor cylindrique sont formées en une fente légèrement rectangulaire (29b) ayant une extrémité ouverte.

12. Détecteur de vitesse de roue selon la revendication 10 ou 11, dans lequel une longueur (B) de la fenêtre ou de la fente, mesurée suivant un axe de rotation du rotor, est supérieure à une longueur effective (A) du dispositif de capteur formant les deux commutateurs magnétiques.

13. Détecteur de vitesse de roue selon la revendication 1, dans lequel le rotor est disposé à l'extérieur du dispositif de capteur.

14. Détecteur de vitesse de roue selon la revendication 1, dans lequel le rotor est disposé à l'intérieur du dispositif de capteur.

15. Détecteur de vitesse de roue selon la revendication 2, dans lequel :

une série de mâchoires (243, 253) sont formées sur une première extrémité de la paire des noyaux magnétiques, le nombre de mâchoires formées sur les deux noyaux magnétiques étant le même, et

un moyen de positionnement (2412) est disposé sur les noyaux magnétiques pour positionner les mâchoires des deux noyaux pour faire face l'un à l'autre lorsque les deux noyaux sont assemblés.

16. Détecteur de vitesse de roue selon la revendication 15, dans lequel :

le dispositif de capteur comporte, en outre, une bobine (2022) sur laquelle la bobine électromagnétique est enroulée, et

le moyen de positionnement comporte une pluralité de saillies (2241) disposées sur la bobine et des trous (2412) disposés sur au moins un des noyaux de sorte que les saillies s'ajustent dans les trous.

# FIG.1

# FIG. 2(A)

# FIG. 2(B)

# FIG. 3

# FIG. 4

# FIG. 5(A)

# FIG. 5(B)

# FIG. 6(A)

# FIG. 6(B)

# F I G . 7(A)

# F I G . 7(B)

# FIG. 8(A)

# FIG. 8(B)

FIG. 9

45  43  41

47  N ← S  47

H

5  47a  47b

5c(5a,5b)

FIG. 10(A)

55  51

53  N  57

53  59

53a  S  H

5  57a

5c(5a,5b)

FIG. 10(B)

53

N

S  S

53a

FIG.11(A)

FIG.11(B)

FIG.12

# FIG.13

81

89a 89

A

5

87a

87

5c (5a,5b)

83

H

N —←— S

85

# FIG.14

81

89 89a

5b
5a  5c

5

87a

87

83

# FIG. 15(A)

# FIG. 15(B)

# FIG. 16

# FIG. 17(A)

# FIG. 17(B)

EP 0 756 174 B1

FIG.18(A)

FIG.18(B)

# FIG.19

# FIG. 20

# FIG. 21

# FIG. 22(A)

# FIG. 22(B)

# FIG. 23(A)

# FIG. 23(B)

# FIG. 24(A)

# FIG. 24(B)

# FIG. 24(C)